# EUROPÄISCHE PATENTSCHRIFT

(11) **EP 0 947 759 B1**
(45) Veröffentlichungstag und Bekanntmachung des Hinweises auf die Patenterteilung: **23.04.2003**
(21) Anmeldenummer: 99102010.8
(22) Anmeldetag: 01.02.1999
(51) Int. Cl.: F16L 37/084

(54) **Steckkupplung für Druckmittelsysteme**
Plug-in coupling for hydraulic systems
Raccord enfichable pour systèmes hydrauliques

(30) Priorität: 28.03.1998 DE 29805720 U
(43) Veröffentlichungstag der Anmeldung: 06.10.1999
(73) Patentinhaber: Voss Automotive GmbH, 51688 Wipperfürth (DE)
(72) Erfinder: Heinrichs, Gundolf, 58762 Altena (DE); Berg, Manfred, 51688 Wipperfürth (DE)
(74) Vertreter: Patentanwälte Dr. Solf & Zapf

(56) Entgegenhaltungen:
- EP-A- 0 005 865
- DE-A- 2 824 943
- DE-A- 19 715 293
- DE-C- 19 728 137

## Beschreibung

Die vorliegende Erfindung betrifft eine Steckkupplung für Druckmittelsysteme, gemäß dem Oberbegriff von Anspruch 1. Eine solche ist bekannt aus EP-A- 0005865.

Derartige Steckkupplungen können vorzugsweise für Rohr- und Schlauchleitungen in Niederdrucksystemen, beispielsweise in Kraftfahrzeug-Bremssystemen eingesetzt werden und sind aus dem deutschen Patent DE 28 24 943 C2 bekannt. Das Federelement dient dabei dazu, eine axiale Vorspannung in der Steckverbindung zu erzeugen. Zum Aufheben einer bestehenden Steckverbindung (Raststellung des Steckerteils im Aufnahmeteil) kann der Spreizzylinder gegen die Wirkung des Federelementes in Steckrichtung in die Aufnahmeöffnung geführt werden und das Halteelement zur Freigabe des arretierten radialen Absatzes des Steckerschaftes aufspreizen. Für die Ausbildung des Federelementes sind dabei aus dem genannten deutschen Patent und aus der EP-A-0 005 865 unterschiedliche Ausbildungsformen bekannt. So kann das Federelement z.B. als Schraubenfeder, als zylindrische Schutzhülse oder als Zylinder aus gummielastischem Material mit einer an seiner Umfangsfläche umlaufenden Einbuchtung zur Einstellung der Federkennlinie ausgebildet sein. Die bekannten Steckkupplungen haben sich in vielfachen Ausführungen in der Praxis bewährt. Jedoch hat es sich gezeigt, daß insbesondere im Hinblick auf die Montagefreundlichkeit noch Verbesserungsmöglichkeiten bestehen.

Der vorliegenden Erfindung liegt daher die Aufgabe zugrunde, ausgehend von dem genannten Stand der Technik eine Steckkupplung zu schaffen, die sich bei einfacher und preisgünstiger Herstellung sowie hoher Betriebs- und Funktionssicherheit durch eine verbesserte Montagefreundlichkeit auszeichnet.

Erfindungsgemäß wird dies durch eine Steckkupplung mit den Merkmalen von Anspruch 1 erreicht.

Durch die erfindungsgemäße Ausbildung des Federelementes kann dieses zum Aufheben einer bestehenden Steckverbindung von Stecker- und Aufnahmeteil aus dem Bereich des Spreizzylinders entfernt werden, so daß der Spreizzylinder vorteilhafterweise nicht gegen die Wirkung des Federelementes in Steckrichtung in die Aufnahmeöffnung gedrückt zu werden braucht.

Im Gegensatz zum bekannnten Stand der Technik kann das Federelement vorteilhafterweise dabei so ausgelegt werden, daß der Spreizzylinder bei nicht entferntem Federelement auch gar nicht soweit gegen die Wirkung des Federelementes in Steckrichtung in die Aufnahmeöffnung gedrückt werden kann, daß die Arretierung aufgehoben wird. Das Federelement dient auf diese Weise gleichzeitig als Sicherungselement gegen ein ungewolltes Lösen der Verbindung, so daß andere Sicherungselemente nicht vorgesehen zu werden brauchen.

In bevorzugter Ausführung kann dabei ein O-Ring als Federelement eingesetzt werden. Dieser wirkt mit Vorteil als ein Multifunktionselement, das neben der Funktion des Aufbringens der axialen Vorspannung (Federfunktion) im gestecktenen Zustand durch Formschluß mit dem Spreizzylinder auch eine Sicherung gegen ungewolltes Lösen der Verbindung (Sperrfunktion), eine Schwingungsdämpfung bei betriebsbedingten Vibrationen und darüber hinaus eine Schmutzabdichtung bewirkt.

Zusätzlich kann der Spreizzylinder zur Erleichterung des Montagevorgangs auf dem Steckerteil mit Vorteil durch eine Längsschlitzung radialelastisch spreizbar sein, wobei ein als Federelement eingesetzter O-Ring dann in Erfüllung einer weiteren Funktion auch eine radiale Vorspannung des Spreizzylinders bewirkt und den Längsschlitz geschlossen hält.

Weitere vorteilhafte Ausgestaltungsmerkmale der Erfindung sind in den Unteransprüchen sowie der folgenden Beschreibung enthalten.

Anhand eines in der Zeichnung dargestellten, bevorzugten Ausführungsbeispiels soll die Erfindung nun genauer erläutert werden. Dabei zeigen:
- Fig. 1 und 2: zwei Phasen des Steckvorgangs einer erfindungsgemäßen, im Axialschnitt dargestellten Steckkupplung,
- Fig. 3: ebenfalls im Axialschnitt, die in Fig. 1 und 2 dargestellte erfindungsgemäße Steckkupplung im gesteckten Zustand,
- Fig. 4 bis 7: im Axialschnitt, verschiedene Phasen des Lösevorgangs der erfindungsgemäßen in Fig. 1 bis 3 dargestellten Steckkupplung, wobei
- Fig. 6: eine vergrößerte Darstellung des Details VI in Fig. 5 ist.

In den verschiedenen Figuren der Zeichnung sind gleiche Teile stets mit denselben Bezugszeichen versehen und werden daher in der Regel auch jeweils nur einmal beschrieben.

Wie sich aus der Zeichnung ergibt, besteht eine erfindungsgemäße Steckkupplung aus einem Aufnahmeteil 1 und aus einem Steckerteil 2.

Das Aufnahmeteil 1 kann in vielfältiger Weise hinsichtlich Formgebung und Werkstoff ausgeführt sein. Vorzugsweise kann es für Niederdruckanwendungen aus Kunststoff bestehen. Zur Verschraubung mit anderen Bauteilen kann das Aufnahmeteil 1 - wie dargestellt- ein Außengewinde 3 aufweisen.

Das Steckerteil 2 ist mit einem Steckerschaft 4 umfangsgemäß abgedichtet in eine Aufnahmeöffnung 5 des Aufnahmeteils 1 in einer Steckrichtung S einsteckbar. Zur umfangsgemäßen Abdichtung kann dabei ein in einer Umfangsnut 6 der Aufnahmeöffnung 5 des Aufnahmeteils 1 angeordneter Dichtungsring 7 dienen.

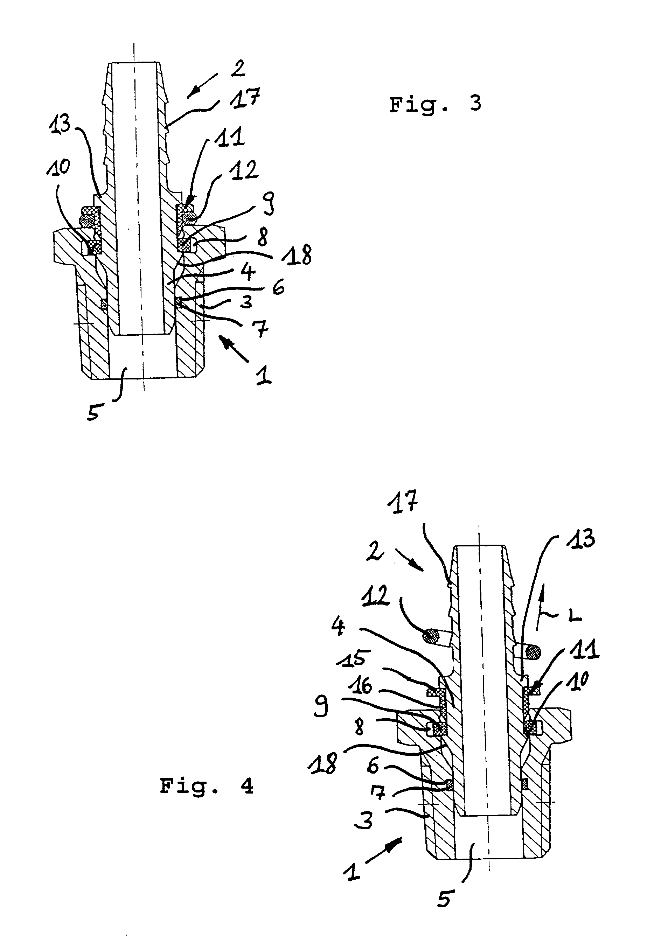

Über ein in einer Ausnehmung 8, insbesondere in einer Spreizringnut, des Aufnahmeteils 1 sitzendes aufspreizbares Halteelement 9, wie einen Spreizring, ist das Steckerteil 2 in einer gesteckten, druckdicht abgedichteten Raststellung gegen Lösen arretierbar (Fig. 3). In dieser Raststellung hintergreift ein radialer Absatz 10 des Steckerschaftes 4 das Halteelement 9 rastend. Der Steckerschaft 4 trägt - in Steckrichtung S hinter dem radialen Absatz 10 - einen axial beweglichen Spreizzylinder 11. Der Spreizzylinder 11 stützt sich bei Vorliegen der gesteckten Raststellung einerseits über ein koaxial angeordnetes Federelement 12 am Aufnahmeteil 2 und andererseits an einem Anschlag 13, beispielsweise einem Bund, des Steckerschaftes 4 ab. Der Spreizzylinder dient zum Lösen der Verbindung, d.h. zur Aufhebung der Raststellung.

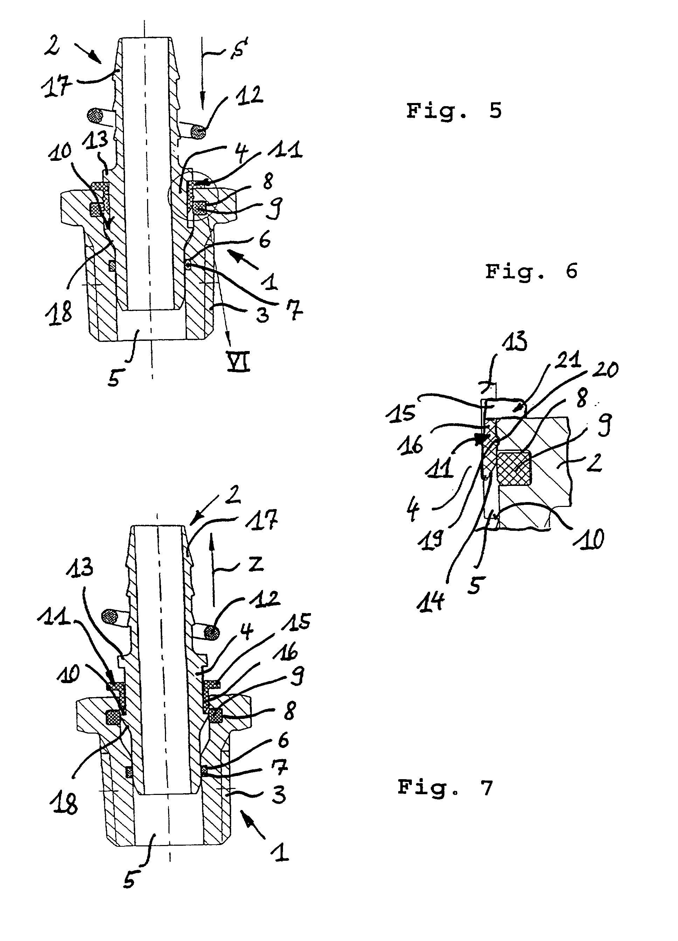

Zum Aufspreizen des Halteelementes 9 beim Lösen einer Steckverbindung kann der Spreizzylinder 11 auf seiner in Steckrichtung S weisenden Stirnseite vorzugsweise eine Anfasung 14 aufweisen (Fig. 6).

Auf seiner entgegengesetzten, der Steckrichtung S abgekehrten Stirnseite kann der Spreizzylinder 11 einen Flansch 15 aufweisen, an dem das Federelement 12 zur Anlage kommen kann.

Der Spreizzylinder 11 kann mit Vorteil aus Kunststoff hergestellt sein und zur Gewährleistung der Aufspreizbarkeit bei seiner Montage auf das Steckerteil 2 einen Längschlitz aufweisen.

Erfindungsgemäß ist das Federelement 12 derart radialelastisch aufweitbar, daß es entgegen der Steckrichtung (in Richtung des Pfeiles L in Fig. 4) über die größte Umfangskontur des Spreizzylinders 11, beispielsweise in der dargestellten Ausführung über dessen Flansch 15, geführt werden kann.

In der dargestellten bevorzugten Ausführungsform ist das Federelement 12 als - vornehmlich großvolumiger - O-Ring ausgebildet und besteht aus einem Elastomer, wie vorzugsweise aus einem Ethylen-Propylen-Dien-Kautschuk (EPDM), der sich durch hohe Licht- und Ozonbeständigkeit auszeichnet. Durch geeignete Werkstoffauswahl kann dabei die radialelastische Aufweitbarkeit eingestellt werden. Bevorzugt eignen sich O-Ringe mit einer Härte von weniger als 70, vorzugsweise weniger als 60 Shore A.

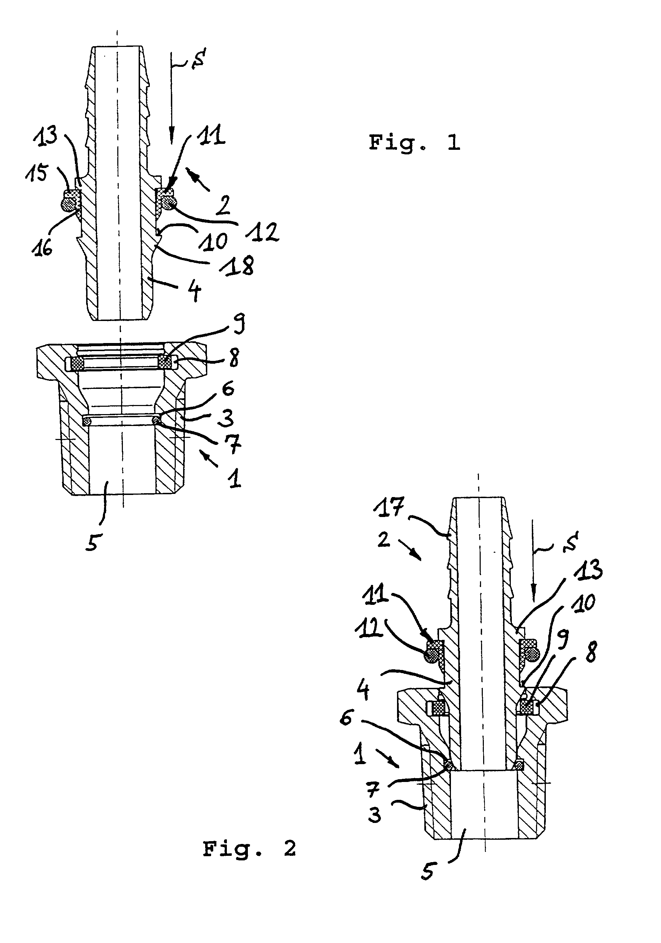

Wie Fig. 1 und 2 zeigen, die den Steckvorgang veranschaulichen, kann das Federelement 12 - bis zur Anlage an dem Flansch 15 auf einen hülsenartigen Teil 16 des Spreizzylinders 11 aufgesteckt - zur Montage einer erfindungsgemäßen Steckkupplung entgegen der Steckrichtung S auf das Steckerteil 2 geschoben werden. Fig. 1 zeigt, daß sich der Spreizzylinder 11 mit dem Federelement 12 (O-Ring) zwischen dem radialen Absatz 10 und dem Bund, der den Anschlag 13 bildet, auf dem Steckerschaft 4 befinden. Der Innendurchmesser des O-Ringes ist dabei nur so groß, daß der geschlitzte Spreizzylinder 11 nicht aufgeweitet ist. Auf diese Weise vorbereitet kann das Steckerteil 2 in das Aufnahmeteil 1 eingeführt werden.

Auf der dem Steckerschaft 4 gegenüberliegenden Seite des Steckerteiles 2 ist eine Umfangsprofilierung 17 zum Anschluß einer Kunststoff-Rohrleitung vorgesehen. Bedarfsweise könnte das Profil dieser Umfangsprofilierung 17 auch an Anschluß eines Schlauches angepaßt werden.

Wie aus Fig. 2 hervorgeht, wird das Halteelement 9 beim Einführen des Steckerteils 2 in das Aufnahmeteil 1 durch einen sich konisch auf den radialen Absatz hin aufweitenden Abschnitt 18 des Steckerschaftes 4 in die Ausnehmung 8 hinein aufgespreizt. Danach verrastet der radiale Absatz 10 des Steckerschaftes 4 mit dem Halteelement 9, indem dieses radial nach innen zurückfedert. Im vollständig gesteckten Zustand der erfindungsgemäßen Steckkupplung tritt so die bereits vorstehend beschriebene Raststellung (Fig. 3) ein.

Zur gewollten Aufhebung der Arretierung wird das Federelement 12, wie Fig. 4 zeigt, entfernt, indem es entgegen der Einsteckrichtung (Pfeil L) unter radialer Aufweitung über den Flansch 15 des Spreizzylinders 11 und vorzugsweise auch über den den Anschlag 13 für den Spreizzylinder 11 bildenden Bund des Steckerschaftes 4 gezogen wird.

Nun kann der Spreizzylinder 11 axial in Einsteckrichtung S (Fig. 5) bewegt werden, wobei er die Verrastung des Halteelementes 9 mit dem radialen Absatz 10 des Steckerschaftes unter Aufweitung des Halteelementes 9 aufhebt. Die Axialbewegung des Spreizzylinders 11 kann dabei durch ein Nachstecken des Steckerteiles 2 bis zum Anschlagen des Spreizzylinders 11 am Aufnahmeteil 1 herbeigeführt werden, wobei der Spreizzylinder 11 anderseitig direkt am Anschlag 13 des Steckerteils 2 anliegt.

Wie die Detaildarstellung in Fig. 6 zeigt, wird der Aufspreizvorgang des Halteelementes 9 und insbesondere die nachfolgende Entnahme des Steckerteiles 2 dadurch unterstützt, daß am Umfang des Spreizzylinders 11 ein Wulst 19 vorgesehen ist, der mit einer korrespondierenden, umfänglich in der Aufnahmeöffnung 5 des Aufnahmeteiles 1 angeordneten Ausnehmung 20 bei aufgespreiztem Halteelement 9 eine kraftformschlüssige Verbindung bildet. Diese Verbindung gewährleistet, daß bei einem sich nun anschließenden Zurückziehen des Steckerteils 2 (Fig. 7), zunächst keine Mitnahme des Spreizzylinders 11 in Zugrichtung Z des Stekkerteils 2 erfolgt. Auf diese Weise hält der Spreizzylinder 11 das Halteelement 9 solange in seiner gespreizten Stellung, bis der radiale Absatz 10 des Steckerschaftes 4 zumindest die der Arretierung dienende Kante des Halteelementes 9 in axialer Richtung passiert hat. Dementsprechend ist die axiale Länge des hülsenartigen Abschnitts 16 des Spreizzylinders 11 zu dimensionieren. Bei weiterem Zug am Steckerteil 2 wird danach durch Anlage des radialen Absatzes 10 am Spreizzylinder 11 letzterer mit dem Steckerteil 2 aus der Aufnahmeöffnung 5 des Aufnahmeteils 1 gezogen.

Die Erfindung ist nicht auf das dargestellten Ausführungsbeispiel mit einem O-Ring als Federelement 12 beschränkt, sondern umfaßt auch alle im Sinne der Erfindung gleichwirkenden Ausführungen. Beispielsweise könnte anstelle des O-rings auch eine geschlitzte ringförmige Scheibe verwendet werden, deren Gummielastzität dann geringer sein kann als die eines O-Rings. Außerdem kann der Fachmann weitere zweckmäßige Merkmale zur konstruktiven Gestaltung einer erfindungsgemäßen Steckkupplung vorsehen. Beispielsweise zeigt Fig. 6, daß der Flansch 15 des Spreizzylinders 11 an seinem Umfang eine vorzugsweise kerbartige Ausnehmung 21 aufweist, die das Entfernen des multifunktionell wirkenden Federelementes 12 erleichtert.

## Patentansprüche

1. Steckkupplung für Druckmittelsysteme, bestehend aus einem Aufnahmeteil (1) und einem Steckerteil (2), wobei das Steckerteil (2) mit einem Steckerschaft (4) umfangsgemäß abgedichtet in eine Aufnahmeöffnung (5) des Aufnahmeteils (1) in einer Steckrichtung (S) einsteckbar und über ein durch diese Bewegung des Stekkerschaftes (4) aufspreizbares, in einer Aufnahmeöffnung (8) des Aufnahmeteils (1) sitzendes Halteelement (9) gegen Lösen arretierbar ist, indem nach dem Aufspreizen und einem anschließenden Rückfedern des Halteelementes (9) ein radialer Absatz (10) des Steckerschaftes (4) das Halteelement (9) rastend hintergreift, wobei der Steckerschaft (4) zum Aufheben der Arretierung einen axial beweglichen Spreizzylinder (11) trägt, der sich bei Vorliegen der gesteckten Raststellung einerseits mit einer größten Umfangskontur über ein koaxial angeordnetes gummielastisches Federelement (12) am Aufnahmeteil (1) und anderseits an einem Anschlag (13) des Steckerschaftes (4) abstützt und der durch eine axiale Bewegung in Steckrichtung (S) das Halteelement (9) aufspreizt,
**dadurch gekennzeichnet, daß** das Federelement (12) und der Spreizzylinder (11) derart ausgebildet sind, daß das Federelement (12) bei Vorliegen der gesteckten Raststellung unter radialelastischer Aufweitung entgegen der Steckrichtung (S) über die größte Umfangskontur des Spreizzylinders (11) führbar ist und daß der Spreizzylinder (11) nach Entfernung des Federelementes (12) zum Aufheben der Arretierung des Steckerteils (2) unter Aufspreizung des Halteelements (9) in Steckrichtung (S) führbar ist.

2. Steckkupplung nach Anspruch 1,
**dadurch gekennzeichnet, daß** das Federelement (12) derart ausgebildet ist, daß der Spreizzylinder (11) bei nicht entferntem Federelement (12) nicht gegen die Wirkung des Federelementes (12) in Steckrichtung (S) derart weit in die Aufnahmeöffnung (5) gedrückt werden kann, daß die gesteckte Raststellung aufgehoben wird.

3. Steckkupplung nach Anspruch 1 oder 2,
daß die vorzugsweise durch einen Flansch (15) gebildete größte Umfangskontur an ihrem Umfang eine vorzugsweise kerbartige Ausnehmung (21) aufweist.

4. Steckkupplung nach einem der Ansprüche 1 bis 3,
**dadurch gekennzeichnet, daß** der Spreizzylinder (11) auf seiner in Steckrichtung (S) weisenden Stirnseite eine Anfasung (14) aufweist.

5. Steckkupplung nach einem der Ansprüche 1 bis 4,
**dadurch gekennzeichnet, daß** der Spreizzylinder (11) einen Längsschlitz aufweist.

6. Steckkupplung nach einem der Ansprüche 1 bis 5,
**dadurch gekennzeichnet, daß** am Umfang des Spreizzylinders (11) ein Wulst (19) vorgesehen ist, der mit einer korrespondierenden, umfänglich in der Aufnahmeöffnung (5) des Aufnahmeteiles (1) angeordneten Ausnehmung (20) bei aufgespreiztem Halteelement (9) eine kraftformschlüssige Verbindung bildet.

7. Steckkupplung nach einem der Ansprüche 1 bis 6,
**dadurch gekennzeichnet, daß** der Spreizzylinder (11) aus Kunststoff besteht.

8. Steckkupplung nach einem der Ansprüche 1 bis 7,
**dadurch gekennzeichnet, daß** das Federelement (12) als O-Ring ausgebildet ist.

9. Steckkupplung nach Anspruch 8,
**dadurch gekennzeichnet, daß** der O-Ring eine Shore-A-Härte von weniger als 70, vorzugsweise von weniger als 60, aufweist.

10. Steckkupplung nach Anspruch 8 oder 9,
**dadurch gekennzeichnet, daß** der O-Ring aus EPDM besteht.

## Claims

1. Plug-in coupling for pressure-medium systems, comprising a holding part (1) and a plug part (2), it being possible for the plug part (2) to be plugged with a plug shank (4) sealed off at the circumference in a plug-in direction (S) into a receiving opening (5) in the holding part (1) and locked against detachment by a retaining element (9) which is seated in a receiving opening (8) in the holding part (5) and can be spread by this movement of the plug shank (4), in that, after the retaining element (9) has been spread and subsequently sprung back, a radial ledge (10) on the plug shank (4) engages in a latching manner behind the retaining element (9), the plug shank (4) bearing an axially moveable spreading cylinder (11) for cancelling the locking action which, when in the plugged-in latching position, is supported on one side with a largest circumferential contour via a coaxially arranged resilient spring element (12) on the holding part (1) and on the other side on a stop (13) of the plug shank (4) and which spreads the retaining element (9) by means of an axial movement in the plug-in direction (S), **characterized in that** the spring element (12) and the spreading cylinder (11) are constructed in such a way that, when in the plugged-in latching position, the spring element (12) can be guided over the largest circumferential contour of the spreading cylinder (11), while being widened radially elastically counter to the plug-in direction (S), and **in that** the spreading cylinder (11), after the spring element (12) has been removed, can be guided in the plug-in direction (S), while spreading the retaining element (9), in order to cancel the locking of the plug-in part (2).

2. Plug-in coupling according to Claim 1, **characterized in that** the spring element (12) is constructed in such a way that, when the spring element (12) is not removed, the spreading cylinder (11) cannot be pushed into the receiving opening (5) in the plug-in direction (S) counter to the action of the spring element (12) to such an extent that the plugged-in latching position is cancelled.

3. Plug-in coupling according to Claim 1 or 2, **characterized in that** the largest circumferential contour, preferably formed by a flange (15), has a preferably notch-like cut-out (21) on its circumference.

4. Plug-in coupling according to one of Claims 1 to 3, **characterized in that** the spreading cylinder (11) has a bevel (14) on its end pointing in the plug-in direction (S).

5. Plug-in coupling according to one of Claims 1 to 4, **characterized in that** the spreading cylinder (11) has a longitudinal slit.

6. Plug-in coupling according to one of Claims 1 to 5, **characterized in that** on the circumference of the spreading cylinder (11) there is provided a bead (19) which forms a force-fitting and form-fitting connection with a corresponding recess (20) arranged circumferentially in the receiving opening (5) of the holding part (1) when the retaining element (9) is spread.

7. Plug-in coupling according to one of Claims 1 to 6, **characterized in that** the spreading cylinder (11) consists of plastic.

8. Plug-in coupling according to one of Claims 1 to 7, **characterized in that** the spring element (12) is designed as an O-ring.

9. Plug-in coupling according to Claim 8, **characterized in that** the 0-ring has a Shore A hardness of less than 70, preferably of less than 60.

10. Plug-in coupling according to Claim 8 or 9, **characterized in that** the 0-ring consists of EPDM.

## Revendications

1. Raccord emboîtable pour systèmes de fluides sous pression, comprenant une partie logement (1) et une partie à emboîter (2), la partie à emboîter (2) avec un corps d'emboîtement (4) pouvant être emboîtée dans une direction d'emboîtement (S) de manière étanche sur son pourtour dans une ouverture de réception (5) de la partie logement (1) et être bloquée pour empêcher la séparation par l'intermédiaire d'un élément de retenue (9) situé dans une ouverture de réception (8) de la partie logement (1), pouvant s'écarter par ce déplacement du corps d'emboîtement (4), par le fait que, après l'écartement suivi d'un retour élastique de l'élément de retenue (9), celui-ci s'engage derrière un épaulement radial (10) du corps d'emboîtement (4), le corps d'emboîtement (4) portant, pour supprimer le blocage, un cylindre d'écartement (11) mobile dans le sens axial qui s'appuie, dans la position de blocage avec emboîtement, avec un plus grand contour périphérique par l'intermédiaire d'un élément élastique (12) en caoutchouc disposé coaxialement contre la partie logement (1), d'une part, et contre une butée (13) du corps d'emboîtement (4), d'autre part, et qui écarte l'élément de retenue (9) par un déplacement axial dans la direction d'emboîtement (S), **caractérisé en ce que** l'élément élastique (12) et le cylindre d'écartement (11) sont conçus de façon que l'élément élastique (12), dans la position de blocage avec emboîtement, puisse être guidé, en s'élargissant de manière élastique dans le sens radial, en sens inverse de la direction d'emboîtement (S) par l'intermédiaire du plus grand contour périphérique du cylindre d'écartement (11) et que le cylindre d'écartement (11), après enlèvement de l'élément élastique (12), puisse être guidé dans la direction d'emboîtement (S) pour supprimer le blocage de la partie à emboîter (2) en écartant l'élément de retenue (9).

2. Raccord à emboîtement selon la revendication 1, **caractérisé en ce que** l'élément élastique (12) est conçu de façon que lé cylindre d'écartement (11), lorsque l'élément élastique (12) n'est pas enlevé, ne puisse être comprimé en s'opposant à l'action de l'élément élastique (12) dans la direction d'emboîtement (S) assez loin dans l'ouverture de réception (S) pour que la position de blocage avec emboîtement soit supprimée.

3. Raccord à emboîtement selon la revendication 1 ou 2, **caractérisé en ce que** le plus grand contour périphérique formé de préférence par une bride (15) présente, sur sa périphérie, un évidement (21) de préférence en forme d'encoche.

4. Raccord à emboîtement selon l'une des revendications 1 à 3, **caractérisé en ce que** le cylindre d'écartement (11) présente un biseau (14) sur sa face d'extrémité regardant dans la direction d'emboîtement (S).

5. Raccord à emboîtement selon l'une des revendications 1 à 4, **caractérisé en ce que** le cylindre d'écartement (11) présente une fente longitudinale.

6. Raccord à emboîtement selon l'une des revendications 1 à 5, **caractérisé en ce qu'**il est prévu, sur le pourtour du cylindre d'écartement (11), un bourrelet (19) qui forme une liaison solidaire par une liaison dynamique avec correspondance de forme avec un évidement (20) correspondant, disposé sur le pourtour dans l'ouverture de réception (5) de la partie logement (1), lorsque l'élément de retenue (9) est écarté.

7. Raccord à emboîtement selon l'une des revendications 1 à 6, **caractérisé en ce que** le cylindre d'écartement (11) est en matière plastique.

8. Raccord à emboîtement selon l'une des revendications 1 à 7, **caractérisé en ce que** l'élément élastique (12) est conçu comme un joint torique.

9. Raccord à emboîtement selon la revendication 8, **caractérisé en ce que** le joint torique présente une dureté Shore A inférieure à 70, de préférence inférieure à 60.

10. Raccord à emboîtement selon la revendication 8 ou 9, **caractérisé en ce que** le joint torique est en EPDM.
